# EUROPEAN PATENT APPLICATION

(11) **EP 1 840 033 A2**
(43) Date of publication of application: **03.10.2007**
(21) Application number: 07251378.1
(22) Date of filing: 29.03.2007
(51) Int. Cl.: B65B 23/14, B65B 35/50, B65B 57/14, B65G 59/06

(54) **Improvements in or relating to the packing of articles**

(30) Priority: 31.03.2006 GB 0606559
(71) Applicant: UNITED BISCUITS (UK) LIMITED, Hayes, Middlesex UB4 8EE (GB)
(72) Inventor: Parsons, William Charles, Liverpool L17 6AW (GB)
(74) Representative: Humphreys, Ceris Anne

(57) **Abstract**

An apparatus for forming and delivering a stack of planar articles, comprises a feed device (1) for feeding a stream of articles (B, S), a measuring chamber (7) for receiving a plurality of the articles forming a stack, a stop device (11) for determining the height of stack to be formed, the stop device preventing additional articles entering the measuring chamber once the desired height is attained, and a dispensing device (16) comprising a dispensing chamber for receiving the stack from the measuring chamber, the articles being delivered into the dispensing chamber from above, and the dispensing chamber comprising in a lower region an openable outlet (10) for delivering the stack of articles. The apparatus allows the delivery of a stack of planar articles, for example biscuits, into a pack automatically and with low breakage rates.

## Description

The invention relates to apparatus for the insertion of articles into packs having pockets for receiving the articles. The invention is in particular, but not exclusively, for use in the packing of food products, especially biscuits or snack products.

The term "biscuit" as used herein extends to crackers, wafers, cookies, and the like. The term "snack product" as used herein includes, without limitation, fabricated snack products, crisps and the like, whether fried, baked or fried and baked.

Certain biscuit products are sold in the form of biscuit selections, including more than one kind of biscuit, often including biscuits of different shapes. For example, a biscuit selection may include first and second kinds of biscuit, the first kind being round and the second kind being rectangular. It is common practice to pack such biscuit selections in a plastic tray, often made by vacuum forming and known as a "vacutray", having a multiplicity of pockets, each pocket intended for receiving an individual stack of biscuits. One or more of the pockets may be rectangular, with the remainder typically being round. The biscuits are often placed manually into the pockets. Manual loading of the pockets is disadvantageous, however, in that it is labour-intensive. Further, the degree of wastage due to breakage can vary significantly according to the skill of the manual operative. It would be desirable to automate the loading of some or all of the pockets, making the process more economical and reliable as a result of the lesser requirement for manual operators. Attempts at automation to date have been of limited success.

The invention provides an apparatus for forming and delivering a stack of planar articles, comprising:
a feed device for feeding a stream of articles;
a measuring chamber for receiving a plurality of the articles in register with one another and forming a stack;
a stop device for determining a desired height of stack to be formed, the stop device preventing additional articles entering the measuring chamber once the desired height is attained; and
a dispensing device comprising a dispensing chamber for receiving the stack from the measuring chamber, the articles being delivered into the dispensing chamber from above, and the dispensing chamber comprising in a lower region, preferably in its bottom surface, an openable outlet for delivering the stack of articles.

The apparatus of the invention allows the stack of articles to be formed in a simple manner from an advancing stream of articles and, in particular, allows the articles to be delivered into a dispensing device in such a manner that the articles will be substantially free from lateral forces or impacts during delivery into the dispensing device.

Advantageously, the stop device, which preferably acts as a measuring device, is adjustable to permit selection of a desired height for a stack of articles to be delivered. In one embodiment, the stop device comprises a pair of opposing clamp members, arranged to be on opposing sides of the stream of articles. By using clamp members instead of, for example, separating plates or other members that are to be inserted between adjacent articles, it is possible for the advancing stream of articles to be stopped by gentle application of force to the edges of the advancing stream, thereby reducing the likelihood of damage to the articles. That is advantageous, for example, in the case of fragile articles such as biscuits or snack products.

In one preferred arrangement, the feed device comprises an elongate feed channel in which the planar articles are advanced in register with one another. The feed device is advantageously a vibratory feeder. Advantageously, the feed device comprises a halt device for temporarily stopping the advance of the stream of articles. The halt device, which may comprise for example a clamp device, advantageously is located upstream of, but in the vicinity of, the measuring chamber.
Where the halt device is a clamp device, the clamp device may comprise opposed members which in use of the apparatus are reciprocable towards and away from the stream of articles. The halt device serves to prevent the advancing stream of articles from applying an undesirable force to the leading biscuits, thereby reducing the risk of breakage thereof.

Preferably, the measuring chamber comprises an inlet in an upper region of the chamber and an outlet in the bottom region of the chamber. Advantageously, the measuring chamber comprises a lower wall in which said outlet is located. Thus, it is preferred for the articles to enter the measuring chamber from above and to leave it through the bottom of the chamber, so that the direction of travel of the articles is substantially unchanged on entry to or during transit through the measuring chamber. In certain preferred embodiments, the outlet comprises an openable door, which is advantageously openable in dependence upon a signal indicating a predetermined location of the dispensing chamber. It is preferred for the dispensing chamber to comprise an aligning device for aligning the planar articles received in the chamber.

Advantageously, the dispensing chamber comprises an inlet in an upper region of the chamber. In that preferred arrangement, the direction of travel of the articles does not change between the measuring chamber and the dispensing chamber, or on entry to the dispensing chamber. Advantageously, the dispensing chamber comprises a lower wall in which said openable outlet, preferably an openable door, is located. The openable outlet is advantageously openable in dependence upon a signal indicating a predetermined location of a container into which the stack of articles is to be delivered.

Advantageously, the dispensing chamber is reciprocably movable between a first position in which it can receive articles delivered from the measuring chamber and a second, return position. In that case, the dispensing chamber can be advanced, preferably in synchronisation with a container into which the articles are to be delivered, and the articles can be deposited in the container whilst the container and the dispensing chamber are being advanced at substantially the same velocity, so that the articles are not subjected to the possibly substantial lateral forces or impacts that might arise if the velocities were different. Advantageously, the articles are deposited into a container for receiving them when the dispensing chamber is located between the first and second positions and is moving towards the second position. On reaching the second position, the direction of the dispensing chamber is reversed and it is returned to the first position, which in practice is usually a position located directly beneath the measuring chamber. Advantageously, there is a sensor arrangement, preferably comprising at least two sensors, for detecting the position of the dispensing device. That enables other functions of the device to be carried out in dependence upon the location of the dispensing chamber along its path of movement. It is preferred for the measuring chamber to be immovable.

The apparatus preferably comprises a conveyor device located beneath the dispensing device for advancing one or more containers to receive the stacked articles, the conveyor device comprising at least one sensor for detecting the position of a container on the conveyor device. That enables the movement of the dispensing device to be controlled in dependence upon the availability and position of a container for receiving the articles. Advantageously, the apparatus further comprises a control device which is arranged temporarily to synchronise the movement of the dispensing device with the conveyor device before delivery of the stack of articles from the dispensing device, and may also control all or some of the operation of the stop device and the halt device, the operation of the trap doors of the measuring chamber and the dispensing chamber, and the operation of the feeder.

The invention also provides an apparatus for forming and delivering a stack of planar articles, comprising:
a feed arrangement for forming individual stacks of articles in register with one another;
a dispensing chamber for receiving a stack, having an upper inlet opening for receiving the stack and comprising in a lower region an openable outlet for delivering the stack of articles, the dispensing chamber being reciprocable to permit movement between a position in which the stack is delivered into the dispensing chamber and a return position;
a control device for controlling the movement of the dispensing chamber and the opening of the outlet;
a conveyor located beneath the dispensing chamber; and
a sensor device for detecting the presence of a pack in which the stack is to be delivered;
wherein the control device and the sensor device are arranged so to synchronise the movement of the dispensing chamber with the movement of a pack detected on the conveyor that the dispensing chamber is temporarily in register with the pack, and, whilst the chamber is substantially in register with the pack, the outlet is opened for delivery of the stack.

The articles are advantageously food products. Preferred food products are biscuits (including crackers, wafers, cookies and the like), snack products (including, for example, crisps and fabricated snacks such as potato snacks, tortilla chips or the like), planar cake products (for example slices), other dough-based products, and confectionery. The apparatus of the invention is particularly advantageous in the handling of those food products, because it enables them to be packed with substantially no manual involvement, giving significant advantages in terms of hygiene and reliability. Furthermore, the apparatus of the invention is well-suited to the handling of fragile products and can be operated with a consistently low rate of product breakage.

One embodiment of the invention will now be described, by way of illustration only, with reference to the accompanying drawings, in which:
Fig. 1 is a schematic view of a biscuit-packing machine incorporating an apparatus according to the invention;
Fig. 2 is a front view, partly in section, of the apparatus;
Fig. 3 is a plan view of a part of the apparatus; and
Fig. 4 is a perspective view of the apparatus including an abbreviated circuit diagram.

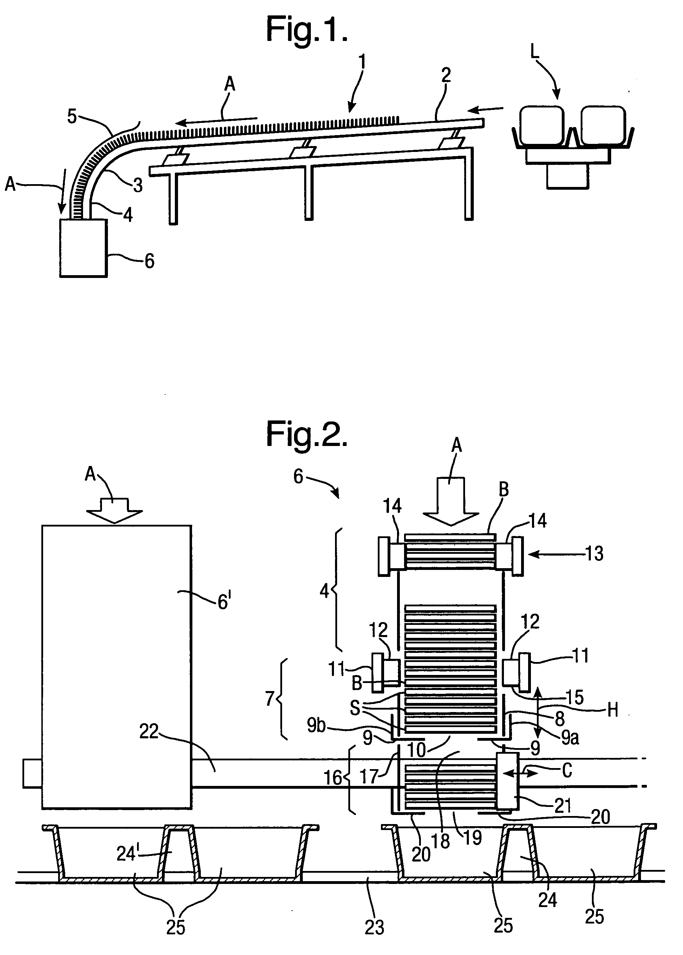

With reference to Fig. 1. the biscuit-packing machine includes a feed device 1 in the form of a vibratory feeder. Vibratory feeders for biscuits are known, and widely used. The feeder may, for example, be a vibratory feeder of the type known as a Syntron (Trade Mark) Linear Drive feeder. Feeders of that type are available in the UK from Riley Automation of Derby, UK. The feeder, shown schematically in Fig. 1, has a first inclined section 2 having a channel in which a continuous stream of biscuits is transported, the biscuits being transported one after the other in register with one another, by means of a vibratory movement which acts, through the wall of the channel, to transport the biscuits forwards. The channel turns downwardly at curved portion 3 and eventually forms a vertical portion 4. Opposed to the curved portion 3 and the vertical portion 4 is a support wall 5. The vibratory feeder may be loaded manually, or automatically by known means, illustrated generally by reference letter L. The direction of travel of the biscuits is indicated by arrows A. The feed device 1 is arranged to feed biscuits from above into a biscuit depositing apparatus 6, the structure and operation of which will be described below with reference to Figs. 2 to 4.

Referring now to Fig. 2, with the outlet of the vibratory feeder 1 (of which only vertical portion 4 can be seen in Fig. 2) there is associated a measuring chamber 7. The measuring chamber 7 is of generally square cross-section in plan, having four side walls 8. The upper wall of the chamber is open. The bottom wall 9 of the chamber has a closable opening 10, for example formed by door members 9a, 9b in the form of a trap door or doors or horizontally slidable elements, through which biscuits B can be released. Such doors are well-known and widely used in the field of food packaging and do not require further description herein. It will be appreciated that "closable" and "openable" as used herein refer merely to closure sufficient to stop the passage of the articles and opening sufficient to allow clear passage of the articles. In the vicinity of the upper opening there is a stop device 11 comprising a pair of opposed clamp members which are able to close laterally against the advancing column of biscuits, in that manner stopping the advance of the biscuit or biscuits upon which the clamp members bear, and thus halting also the advancing stream of biscuits upstream of the clamping mechanism. The clamp members are provided with a layer 12 of non-slip material softer than the surfaces of the clamp members. The biscuits of the stack collected in chamber 7 are indicated by letter S.

A halt device 13 having a further pair of opposed clamp members is provided upstream of the aforementioned stop device. The clamp members of the halt device 13 are of similar construction to those of stop device 11, having soft inner layers 14. The stop device 11 acts as a measuring device. The height of the members 12 is adjustable as shown by arrow H, thereby adjusting the number of biscuits that are positioned between the bottom 15 of members 12 and the bottom wall 9 of the measuring chamber. The halt device 13 is provided in order to halt advancing biscuits, thereby relieving the downward force on the bottom biscuits in chamber 10. The clamping mechanism of halt device 13 is synchronised with operation of the stop device or measuring device 11 and the closable opening 10 as will be further described below.

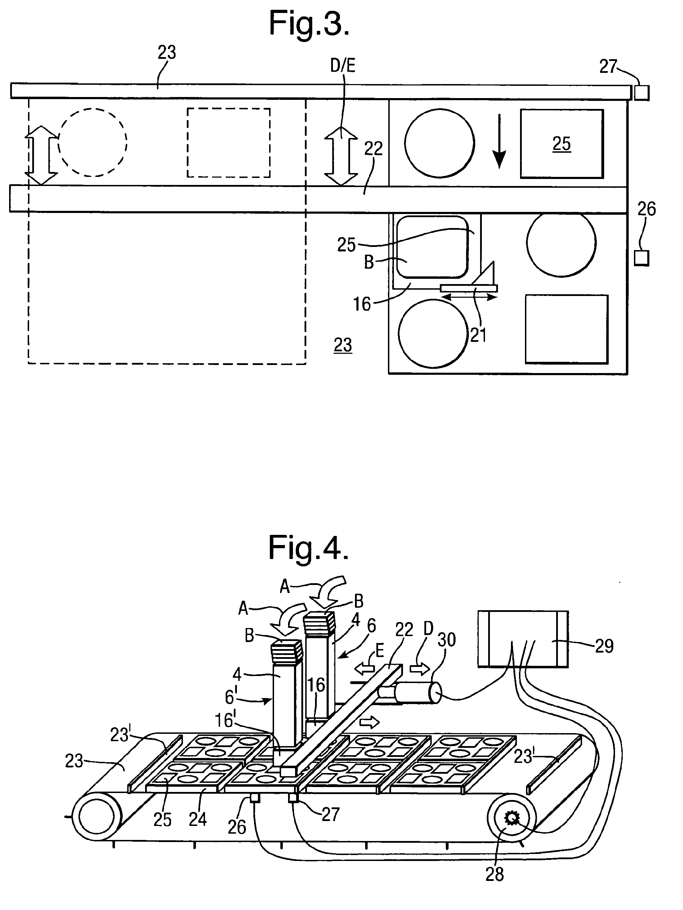

Beneath the measuring chamber in Fig. 1 there is a further chamber 16 for dispensing the collected biscuits. The dispensing chamber is of generally square or rectangular configuration with four side walls 17, an open top 18, and a closable bottom opening 19, for example in the form of a trap door or doors 20. As noted above with reference to the opening 10, "closable" is used in relation to opening 19 to indicate closable to the extent required to stop delivery of the articles and does not of course require complete obstruction of the opening 19. The dispensing chamber 16 further comprises an alignment device 21 for aligning biscuits in a stack received in the dispensing chamber. The alignment device is movable as shown by arrows C. In Fig. 2, the dispensing chamber 16 is shown in a first position in which it can receive biscuits that are deposited through the closable bottom opening 10 of the measuring chamber 7. The dispensing chamber 16 is movable reciprocally along a path shown by the arrows D, E in Fig. 3, from the first position to a second position. In use, the stack of biscuits received in the dispensing chamber will be delivered from the dispensing chamber through the closable opening 19 thereof when the dispensing chamber is at or close to the said second position. The dispensing chamber is moved by means of a movable beam 22, which is driven backwards and forwards by a drive device (not shown in the drawings).

Underneath the dispensing device extends a conveyor 23 which transports successive packs 24 to be filled. The conveyor 23 is provided with transverse spaced walls 23' (see Fig. 4) to allow for precise positioning of the packs 24. The packs are plastic trays having a multiplicity of formed pockets 25 for receiving biscuits. A second apparatus 6' according to the invention is provided adjacent to the apparatus 6 just described and is of like construction.

Referring to Fig. 3, laterally of the conveyor 23, which is travelling in the direction of arrow I, there are provided two sensors. A first sensor 26 detects the advancing trays 24. The second sensor 27 monitors for the leading edge of the tray so as to determine the location of the packet and the timing of deposit of the biscuits therein. As shown in Fig. 3, the alignment device 21 aligns the biscuits by urging them into an opposed reference corner of the device 16.

As shown schematically in Fig. 4, the measuring device 11, the clamps 13, the closable openings 10, 19 of, respectively, the measuring chamber 7, and the dispensing chamber 16, a drive device for beam 22, the sensors 26, 27 associated with the conveyor 23, and the drive roller 28 for the conveyor are all connected to a common control device 29. Reference numeral 30 designates the drive device for the beam 22.

In use, a stream of biscuits B is fed substantially continuously along the feeder channel 2 and down the vertical shaft portion 4. The leading biscuit rests upon the door members 9a, 9b of the measuring chamber 7. The pressure relief clamp 13 is then closed during the remainder of the measuring and depositing process, thereby preventing the continuing advance of the biscuits in the feeder channel 2, 4 temporarily.

The measuring clamps 11, which are set at a height selected to define the desired height of the stack of biscuits to be deposited, are then closed to define the stack of biscuits S to be deposited and to prevent the advance of succeeding biscuits B. The trap door 9a, 9b in the measuring chamber 7 is then opened automatically to permit the measured stack of biscuits to fall through a short distance into the dispensing chamber 16, the trap door 20 of which is closed. When an empty vacuform tray is 24 detected advancing along the conveyor 23, by the detector sensor 26 (see Fig. 3), a dispensing motion of the dispensing chamber is initiated. The dispensing chamber 16 is carried by tracking beam 22 in the same direction as the advancing conveyor 23, the tracking beam being driven at such a speed that the movement of the dispensing chamber 16 is synchronised with that of the advancing vacuform 24. During advance of the dispensing chamber, the stack of biscuits therein is acted upon by the aligning device 21, which urges all of the biscuits towards one corner of the chamber 16, so as to ensure that all of the biscuits in the stack are in register, thereby facilitating delivery into the pocket 25 of the vacuform tray 24. The trap door 20 in the dispensing chamber 16 opens whilst the dispensing chamber is substantially in register with the empty pocket 25 and advancing at substantially the same speed in direction D, and the biscuits fall into the empty pocket. During that phase, the measuring device 7 is being re-primed to deliver a further stack of biscuits to the dispensing chamber, by opening the pressure relief clamps 13 and the measuring clamps 11, which permit the biscuits once again to form a continuous stream, thereafter re-closing the pressure relief clamps 13, and closing the measuring clamps 11 to define a new stack of biscuits in the dispensing chamber for delivery. Having completed deposit of the preceding stack of biscuits in the pocket 25, the dispensing chamber is returned by the driven tracking beam 22 to its original position to receive the next stack of biscuits. The cycle is then repeated for each successive stack of biscuits to be delivered.

In practice, there will generally be more than one line of trays advancing along the conveyor and, furthermore, each tray may have a plurality of pockets to be filled automatically. It will therefore often be found expedient to arrange more than one apparatus of the invention for delivering stacks of biscuits. More than one apparatus may be present to delivery biscuits at different locations across the width of the conveyor (as shown in Fig. 2) and/or along the length of the conveyor. Some or all delivery locations may be arranged in a staggered relationship across the conveyor. If desired, all pockets of each tray may be filled automatically using one or more apparatus according to the invention. The invention also includes, however, the possibility of filling a proportion of the pockets automatically and filling the remainder of the pockets manually, for example, where for reason of their configuration or fragility, the biscuits to be placed in certain pockets are not suitable for automatic handling techniques.

In the illustrated embodiment, the products are square biscuits. It will be appreciated, however, that the apparatus may be suitable for packing any type of planar product, and/or planar products of other shapes than square.

## Claims

1. An apparatus for forming and delivering a stack of planar articles, comprising:
a feed device for feeding a stream of articles;
a measuring chamber for receiving a plurality of the articles in register with one another and forming a stack;
a stop device for determining the height of stack to be formed, the stop device preventing additional articles entering the measuring chamber once the desired height is attained; and
a dispensing device comprising a dispensing chamber for receiving the stack from the measuring chamber, the articles being delivered into the dispensing chamber from above, and the dispensing chamber comprising in a lower region an openable outlet for delivering the stack of articles.

2. An apparatus according to claim 1, in which the stop device is adjustable to permit selection of a desired height for a stack of articles to be delivered.

3. An apparatus according to claim 1 or claim 2, in which the stop device comprises a pair of opposing clamp members, arranged to be on opposing sides of the stream of articles.

4. An apparatus according to any one of claims 1 to 3, in which the feed device comprises an elongate feed channel in which the planar articles are advanced in register with one another.

5. An apparatus according to any one of the preceding claims, in which the feed device comprises a halt device for temporarily stopping the advance of the stream of articles.

6. An apparatus according to claim 5, in which the halt device comprises a clamp device.

7. An apparatus according to claim 6, in which the clamp device comprises opposed members which in use of the apparatus are reciprocable towards and away from the stream of articles.

8. An apparatus according to any on of the preceding claims, in which the measuring chamber comprises an inlet in an upper region of the chamber and an outlet in the bottom region of the chamber.

9. An apparatus according to claim 8, in which the measuring chamber comprises a lower wall in which said outlet is located.

10. An apparatus according to claim 9, in which the outlet comprises an openable door.

11. An apparatus according to claim 10, in which the door is openable in dependence upon a signal indicating a predetermined location of the dispensing chamber.

12. An apparatus according to any one of the preceding claims, in which the dispensing chamber comprises an aligning device for aligning the planar articles received in the chamber.

13. An apparatus according to any one of the preceding claims, in which the dispensing chamber comprises an inlet in an upper region of the chamber.

14. An apparatus according to claim 13, in which the dispensing chamber comprises a lower wall in which said openable outlet is located.

15. An apparatus according to claim 14, in which the outlet comprises an openable door.

16. An apparatus according to claim 15, in which the door is openable in dependence upon a signal indicating a predetermined location of a container into which the stack of articles is to be delivered.

17. An apparatus according to any one of the preceding claims, in which the dispensing chamber is reciprocably movable between a first position in which it can receive articles delivered from the measuring chamber and a second, return position.

18. An apparatus according to claim 17, in which the articles are deposited into a container for receiving them when the dispensing chamber is located between the first and second positions and is moving towards the second position when the articles are deposited.

19. An apparatus according to any one of the preceding claims, in which there is a sensor device for detecting the position of the dispensing device.

20. An apparatus according to any one of the preceding claims, further comprising a conveyor device located beneath the dispensing device for advancing one or more containers to receive the stacked articles, the conveyor device comprising at least one sensor for detecting the position of a container on the conveyor device.

21. An apparatus according to claim 19, further comprising a control device which is arranged temporarily to synchronise the movement of the dispensing device with the conveyor device before delivery of the stack of articles from the dispensing device.

22. An apparatus for forming and delivering a stack of planar articles, comprising:
a feed arrangement for forming individual stacks of articles in register with one another;
a dispensing chamber for receiving a stack, having an upper inlet opening for receiving the stack and comprising in its bottom surface an openable outlet for delivering the stack of articles, the dispensing chamber being reciprocable to permit movement between a position in which the stack is delivered into the dispensing chamber and a return position;
a control device for controlling the movement of the dispensing chamber and the opening of the outlet;
a conveyor located beneath the dispensing chamber; and
a sensor device for detecting the presence of a container in which the stack is to be delivered;
wherein the control device and the sensor device are arranged so to synchronise the movement of the dispensing chamber with the movement of a container detected on the conveyor that the dispensing chamber is temporarily in register with the container, and, whilst the chamber is substantially in register with the container, to open the outlet for delivery of the stack.

23. An apparatus according to claim 22, in which the feed arrangement comprises a measuring chamber in which a predetermined height of stack is formed.

24. An apparatus according to any one of the preceding claims, in which the articles are food items.

25. An apparatus according to any one of the preceding claims, in which the articles are biscuits.

26. An apparatus according to any one of claims 1 to 24, in which the articles are snack products.
